# EUROPEAN PATENT APPLICATION

(11) **EP 4 075 069 A1**
(43) Date of publication of application: **19.10.2022**
(21) Application number: 22167339.5
(22) Date of filing: 08.04.2022
(51) Int. Cl.: F24D 13/02, H05B 3/26, F24D 19/10

(54) **RADIATING PANEL**

(30) Priority: 14.04.2021 IT 202100009305
(71) Applicant: Progress Profiles SPA, 31011 Asolo (Treviso) (IT)
(72) Inventor: BORDIN, Dennis, 31011 Asolo TV (IT)
(74) Representative: Modiano, Micaela Nadia

(57) **Abstract**

A radiating panel which comprises the following succession of layers:
- at least one supporting layer (11) which is at least thermally insulating and which is constituted by a material chosen at least from extruded expanded polystyrene, sintered expanded polystyrene, and polyisocyanurate,
- at least one heating layer (12) which comprises at least one electric heating element (14) and a studded element (13) with interspaces for laying at least one electric heating cable which constitutes the electric element (14), the studded element (13) comprising a shaped sheet element with studs (16) which extends in the opposite direction to the direction of the supporting layer (11),
- at least one finishing layer (15) which is at least thermally conducting and which is made of a material chosen at least from ceramic and natural stone;
the panel (10) also comprises an adhesive (18) between the heating layer (12) and the finishing layer (15), and the studded element (13) is coupled to the supporting layer (11) using means chosen from a layer of glue (17), extruded adhesives, silicone glues, pressure-sensitive adhesive systems, and mechanical fixing means.

## Description

The present invention relates to a radiating panel.

Nowadays, in the sector of decorative radiators, there is a market tendency to offer radiators that can be customized for domestic or hotel installation, and which are warmed by plumbing, electricity, or a mixture of both. Such objects have the form of an assembly of radiant tubular elements, as these are suitable for the circulation of hot water or the insertion of an electric resistor. Widespread among these are radiators, such as heated towel rails, with tubular elements arranged horizontally along at least one transverse tubular element that connects them, interleaved by spaces for arranging towels, and these are wall-mounted using standard supports that comprise wall-fixing brackets and press-in inserts. The transverse tubular elements act as manifolds and in the water-warmed version the radiators are also provided with air-bleed valves at the supports, at the connection to the plumbing system of the home or of the building.

Among these, the installation of electric radiators is particularly widespread, because they need no plumbing system in place, but often only need an electrical socket.

A drawback of conventional radiators lies in the fact that they are often visually unattractive, and it would be preferable for the user to have a product that is hardly noticeable, or even for the heating to emanate from a source in the floor or in the ceiling. However, as is known, a floor heating system requires a special installation, with plumbing or electric circuits installed when the floor is being laid.

The aim of the present invention is to provide a radiating panel which is capable of improving the known art in one or more of the above-mentioned aspects.

Within this aim, an object of the invention is to provide a radiating panel that can be installed easily and in various parts of a dwelling or of a hotel structure, without necessitating an adapted water heating system.

Another object of the invention is to provide a radiating panel that can be provided so as to generate a visual impact that is discreet or in any case in harmony with the surrounding furnishing elements.

A further object of the invention is to provide a radiating panel that can be installed wall-mounted or floor-mounted or ceiling-mounted, at will.

A still further object of the present invention is to overcome the drawbacks of the background art in a manner that is alternative to any existing solutions.

Another object of the invention is to provide a radiating panel that is highly reliable, easy to implement and low-cost.

This aim and these and other objects which will become more apparent hereinafter are achieved by a radiating panel, characterized in that it comprises the following succession of layers:
- at least one supporting layer which is at least thermally insulating and which is constituted by a material chosen at least from among extruded expanded polystyrene, sintered expanded polystyrene, and polyisocyanurate,
- at least one heating layer which comprises at least one electric heating element and a studded element with interspaces for laying at least one electric heating cable which constitutes said electric element, said studded element comprising a shaped sheet element with studs which extends in the opposite direction to the direction of said supporting layer,
- at least one finishing layer which is at least thermally conducting and which is made of a material chosen at least from ceramic and natural stone,
   said panel also comprising an adhesive between said heating layer and said finishing layer, and said studded element being coupled to said supporting layer using means chosen from a layer of glue, extruded adhesives, silicone glues, pressure-sensitive adhesive systems, and mechanical fixing means.

Further characteristics and advantages of the invention will become more apparent from the detailed description that follows of preferred, but not exclusive, embodiments of the radiating device according to the invention, which is illustrated, by way of non-limiting example, in the accompanying drawings wherein:
- Figure 1 is a perspective view of a first embodiment of the panel according to the invention;
- Figure 2 is the same perspective view as in Figure 1 of a second embodiment of the panel according to the invention;
- Figure 3 is a front elevation view of the panel, in its first embodiment, in which the layers have been made partially visible;
- Figure 4 is a cross-sectional side view of the panel according to the invention, still in its first embodiment;
- Figure 5 is a perspective view of the heating layer;
- Figures 6 and 7 are perspective views of a portion of the panel in a variation of embodiment.

With reference to the figures, the radiating panel is generally designated with the reference numeral 10 and comprises the following succession of layers:
- at least one supporting layer 11 which is at least thermally insulating,
- at least one heating layer 12 which comprises at least one electric heating element 14.

This electric element 14 consists preferably of an electrical cable, as illustrated. However, it can be constituted by an element chosen from a cable, a mesh, or a carbon fiber sheet element.

If the electric element 14 is constituted by an electric heating cable, the heating layer 12 advantageously comprises a studded element 13 with interspaces for laying one or more electrical heating cables.

The panel 10 also comprises, in succession after the at least one heating layer 12, a finishing layer 15 which is at least thermally conducting.

In particular, the studded element 13 comprises a shaped sheet element with studs 16 which extends in the opposite direction to the direction of the supporting layer 11 and is constituted by a membrane made of a material chosen preferably from polypropylene and polyethylene.

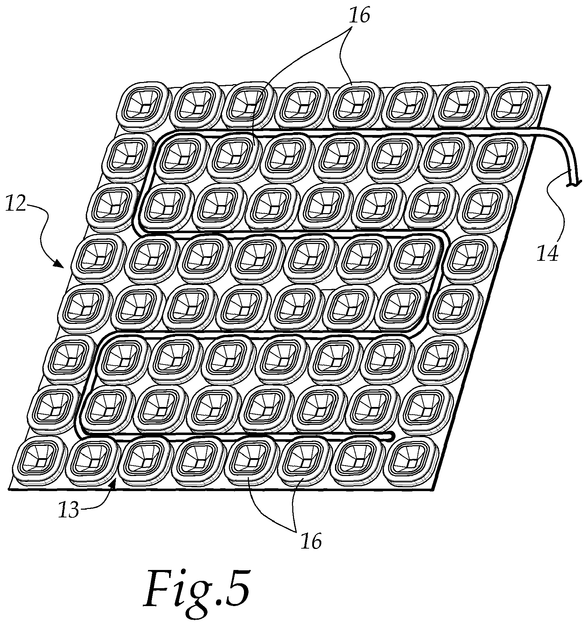

Figure 5 shows the heating layer 12 and how the electric cable is distributed in a coil on the base of the studded element, substantially the base from which the studs 16 extend, and is held in the interspaces by the side walls of those studs 16. The electric cable traces a path with which it is capable of ensuring a substantially uniform distribution of heat on the surface of the successive finishing layer 15. The plastic material of which the studded element 13 is made, which is conventional per se, makes it elastically deformable and the electric cable is therefore easily insertable between the studs 16, which have undercuts that are adapted to ensure the electric cable is kept in place. Such undercuts are defined substantially by a radiusing on the side walls of the studs 16.

Even if the electric element is constituted by a net or by a carbon fiber sheet element, uniform distribution of heat is still obtained on the surface of the successive finishing layer 15.

The electric cable, indicated with 14, exits from the perimeter of the panel, in a lower region in the examples shown, where it can be conveniently associated with a connector (a plug, not shown) for connection to an electrical wiring system of the building in which the panel 10 according to the invention is installed.

Even if the electric heating element is constituted by a net or by a carbon fiber sheet, there is conveniently an electric cable, connected electrically thereto, in order to make the connection to the electrical wiring system.

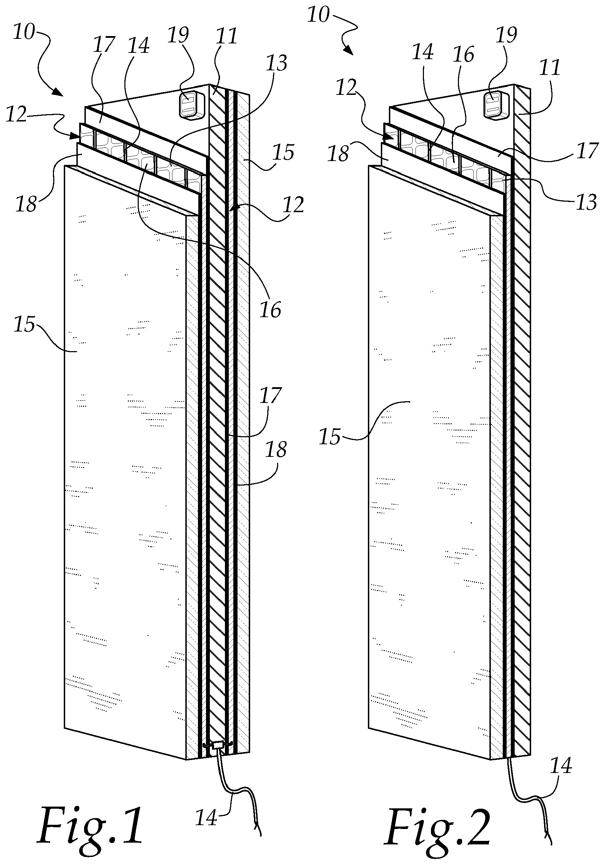

Figure 1 shows a first variation of the panel 10 according to the invention, which comprises a pair of heating layers 12 and, in succession to each one of these, a respective finishing layer 15 so as to enclose in a sandwich-like fashion the supporting layer 11 between the pair of heating layers 12. Substantially, in this variation, the succession of layers, heating 12 and finishing 15, is repeated symmetrically with respect to the supporting layer 11 which therefore forms the central layer of the panel 10.

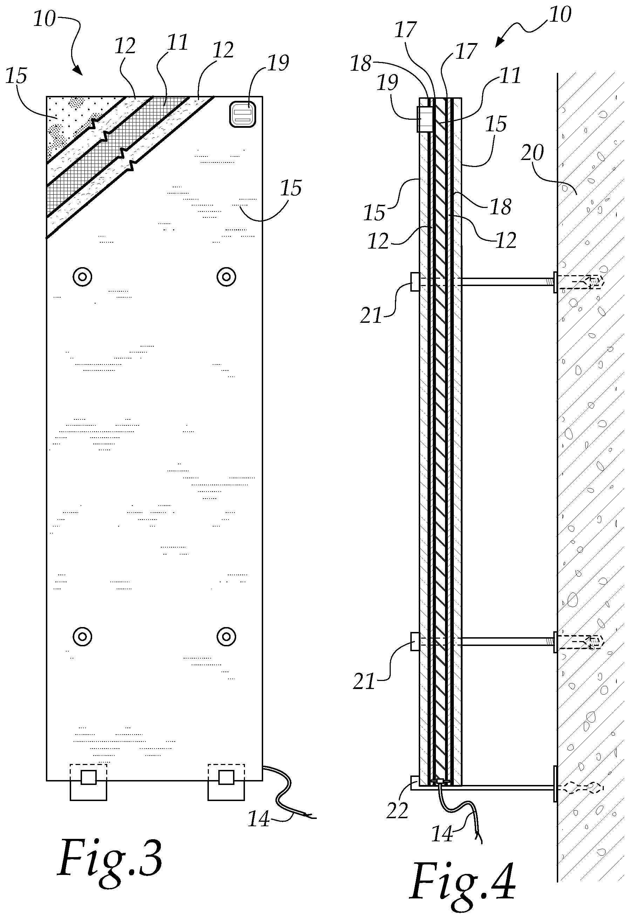

Figures 3 and 4 refer to the same first embodiment, while Figure 2 shows a second embodiment of the panel 10, such that there is a heating layer 12 and a finishing layer 15, the latter being visible once installation is complete.

In both cases, the supporting layer 11 is constituted preferably by a material chosen at least from among extruded expanded polystyrene, sintered expanded polystyrene, polyisocyanurate, which ensure thermal insulation, thus favoring the passage of heat from the heating layer 12 in the opposite direction, i.e. toward the finishing layer 15.

The finishing layer 15 is made of a material preferably chosen from ceramic and natural stone, for example marble. As an alternative it can be constituted, for example, by carpet or by a fabric or by a paintable fiber-reinforced cemented covering, optionally of the same color as the walls on which the panel is installed.

The panel 10 conveniently comprises a layer of glue 17 for bonding the studded element 13 of the heating layer 12 with the supporting layer 11, and an adhesive 18 between the heating layer 12 and the finishing layer 15. In particular, such adhesive 18 is constituted by a thermally conducting cement adhesive, which substantially fills at least partially the gaps present on the studded element 13.

The studded element 13, or other heating systems (like the net or the carbon fiber sheet) can alternatively be fixed to the supporting layer 11 by chemical adhesion, for example using extruded adhesives, silicone glues, or pressure-sensitive adhesive systems, or by mechanical fixing, for example using screws, staples and/or other, similar fixing means.

In place of the ceramic material, stone, carpet, etc., the finishing layer 15 can be made with the application of paint or of resin, or the like, on the cement adhesive 18, after optional suitable smoothing with a fiber-reinforced self-leveling compound.

Alternatively, the coupling of the studded element 13 with the supporting layer 11 can be done using mechanical fixing means, such as screws, inserts, staples, or rivets, of wood or metal.

The panel 10 also advantageously comprises a programmable thermostat 19 of the digital and optionally also remotely adjustable type.

Figure 4 shows, in a cross-sectional view, the panel 10 according to the invention associated with a masonry supporting structure 20 using mechanical fixing means. The fixing can be done at points, with inserts or screws 21, and/or with fall-prevention supports 22.

Alternatively, the panel 10, in the version with heating 12 and finishing 15 layers only on one side of the supporting layer 11, can be installed by floor-laying or wall-mounting.

The possibility of covering the supporting layer 11 on both sides makes it possible to improve the aesthetic impact and, advantageously, to obtain an irradiation of heat in opposite directions in order to increase, if necessary, the amount of heat emitted by the panel.

Furthermore, the possibility of using a finishing layer 15 of ceramic or of natural stone or fiber-reinforced plaster allows the end user to personalize the product with the same finish as the floor and/or as the wall covering.

The finished product, including the finishing layer 15, can be laid directly during installation, or the finishing layer 15 can be applied after installing the product which was sold without such layer.

The thicknesses can be modulated as a function of the installation needs of the product.

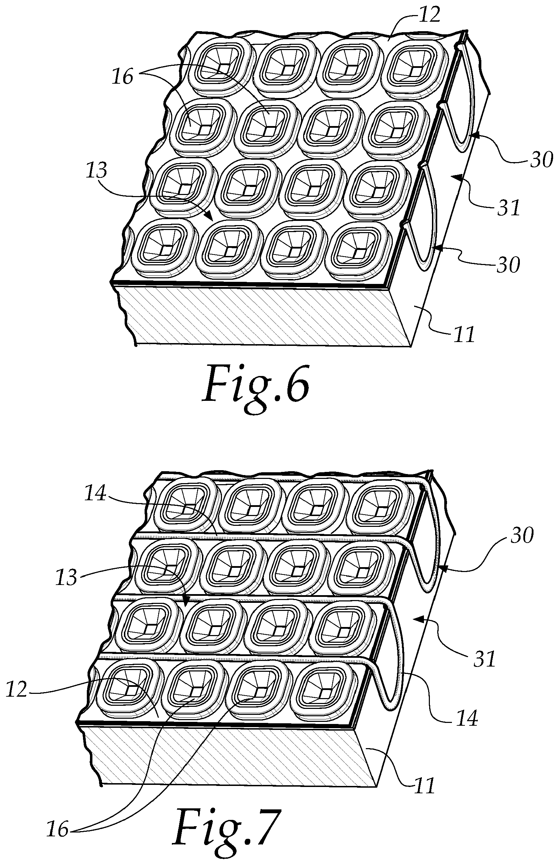

Figures 6 and 7 show a portion of the panel 10, in a possible variation.

In this variation, the supporting layer 11 has one or more recesses 30, for the accommodation/passage of the electric element 14.

In particular, the recesses 30 extend over one or more surfaces 31 of the supporting layer 11 which are at right angles to the surface for interfacing with the studded element 13.

These recesses 30 follow a U-shaped path and are adapted to contain substantially the curves of the electric element 14.

In this manner, the electric element 14, defined by an electric heating cable, is capable of heating not only the surface corresponding to the heating layer 12, but also the side surfaces.

As a consequence, the heat is emitted not only from the front, but also from the sides.

The use of the radiating panel, according to the invention, is evident from the foregoing description and explanation and, in particular, it is evident that it can be installed in any part of a building, simply by connecting it to an outlet of the electrical system of that building and mounting it on a wall or laying it in a floor according to the installation requirements.

In practice it has been found that the invention fully achieves the intended aim and objects by providing a radiating panel that can be installed easily on a wall or in a floor, or even on a ceiling, and which can be customized to generate the desired visual impact.

The invention thus conceived is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102021000009305 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A radiating panel, **characterized in that** it comprises the following succession of layers:
- at least one supporting layer (11) which is at least thermally insulating and which is constituted by a material chosen at least from extruded expanded polystyrene, sintered expanded polystyrene, and polyisocyanurate,
- at least one heating layer (12) which comprises at least one electric heating element (14) and a studded element (13) with interspaces for laying at least one electric heating cable which constitutes said electric element (14), said studded element (13) comprising a shaped sheet element with studs (16) which extends in the opposite direction to the direction of said supporting layer (11),
- at least one finishing layer (15) which is at least thermally conducting and which is made of a material chosen at least from ceramic and natural stone,
said panel (10) also comprising an adhesive (18) between said heating layer (12) and said finishing layer (15), and said studded element (13) being coupled to said supporting layer (11) using means chosen from a layer of glue (17), extruded adhesives, silicone glues, pressure-sensitive adhesive systems, and mechanical fixing means.

2. The panel according to claim 1, **characterized in that** said studded element (13) is constituted by a membrane made of a material chosen from polypropylene and polyethylene.

3. The panel according to one or more of the preceding claims, **characterized in that** said adhesive (18) is constituted by a thermally conducting cement adhesive.

4. The panel according to one or more of the preceding claims, **characterized in that** it comprises a programmable thermostat (19).

5. The panel according to one or more of the preceding claims, **characterized in that** it comprises a pair of said at least one heating layer (12) and, in succession, said respective finishing layer (15) so as to enclose in a sandwich-like fashion said at least one supporting layer (11) between said pair of heating layers (12).

6. The panel according to one or more of the preceding claims, **characterized in that** said supporting layer (11) has one or more recesses (30) for the accommodation/passage of said electric element (14).

7. The panel according to claim 6, **characterized in that** said one or more recesses (30) extend over one or more surfaces (31) of said supporting layer (11) which are at right angles to the surface for interfacing with said studded element (13).

8. The panel according to claim 6 or 7, **characterized in that** said one or more recesses (30) follow a U-shaped path.
